# EUROPEAN PATENT SPECIFICATION

(11) **EP 3 804 577 B1**
(45) Date of publication and mention of the grant of the patent: **16.11.2022**
(21) Application number: 18855197.2
(22) Date of filing: 05.12.2018
(51) Int. Cl.: A47G 29/14, A47G 29/30, A47G 29/22, B64F 1/32, G06Q 10/08

(54) **WINDOW FOR RECEPTION AND DELIVERY OF OBJECTS**
FENSTER FÜR DEN EMPFANG UND DIE LIEFERUNG VON GEGENSTÄNDEN
FENÊTRE POUR LA RÉCEPTION ET LA REMISE D'OBJETS

(30) Priority: 24.05.2018 ES 201830764 U
(43) Date of publication of application: 14.04.2021
(73) Proprietor: Graña Domínguez, Daniel, 36205 Vigo Pontevedra (ES)
(72) Inventor: Graña Domínguez, Daniel, 36205 Vigo Pontevedra (ES)
(74) Representative: Herrero & Asociados, S.L.
(86) International application number: PCT/ES2018/070788
(87) International publication number: WO 2019/224407

(56) References cited:
- WO-A1-2016/138582
- WO-A1-2017/125084
- JP-A- 2002 078 598
- JP-B1- 6 201 092
- US-A1- 2016 257 423
- US-A1- 2017 143 146
- US-B1- 9 527 605

## Description

The present invention relates to a window for receiving and delivering objects which can be associated with purchase orders, said window being able to be used in all types of buildings and dwellings and allowing said orders to be received and delivered without one having to be there.

Relevant prior art documents are WO 2017/125084 A1 and JP 6 201092 B1.

### Background of the Invention

E-commerce, whereby a buyer can shop online for virtually any product which can be delivered within a short time period, is becoming increasingly more common.

One of the biggest problems in the world of online shopping today is the delivery of parcels, when the recipient is not there at the time of delivery.

This involves a significant expense for logistics companies in terms of times, second delivery attempt, fuel, staff, etc. and for the end user, who fails to receive the parcel within the established time, and who often has to go to the logistic facility to retrieve said parcel.

It is also detrimental to online shops as they undertake to deliver the parcel within the established time frame on their web pages.

The fact that people constantly move from place to place as they go about their daily life, be it for work, leisure, and other daily chores means that parcel delivery is an arduous task for a delivery person, with the subsequent economic losses it entails.

The only solutions proposed today by logistics companies consist of delivering the parcel to a neighbor or to predetermined pick-up points which may be located a long distance from the home of the recipient. Therefore, these solutions are very far from being a definitive solution to this problem.

Furthermore, in the case of returning the parcels, the collection of said parcels by the delivery person poses a problem because the person sending the parcel is not there.

Therefore, an objective of the present invention is to provide a window which allows the recipient to be able to receive or send a parcel when he or she is not there.

It is increasingly more common for some companies to deliver orders through aerial means, for example, drones, and for that reason the window has been provided with a landing platform.

### Description of the Invention

The mentioned drawbacks are solved with the window for receiving and delivering orders of the invention which has other advantages that will be described below.

The window for receiving and delivering orders according to the present invention is defined by claim 1, and comprises, inter alia, a frame and a sash attached by mechanical means, and where the sash can be placed in an open position or in a closed or standby position. The window also comprises means which allow entering a code, such that the sash opens upon entering a predetermined code. In the open position, the sash allows the surface thereof to be used for receiving and delivering objects.

The delivery person or the drone can therefore deliver the order by simply knowing the predetermined code, without the recipient having to be at home. In the present specification, the terms object, order and parcel are used interchangeably.

Preferably, said code entering means comprise a code reader or a keypad for entering a code. The reader can be of codes of any type, such as QR codes, RFID codes, barcodes, etc., or a touch screen to enable manually entering said code.

Advantageously, the window comprises an actuator for moving the sash from the standby position to the open position, and vice versa, and said actuator and said code entering means are connected to a processor, such that when the processor determines that the code which has been entered coincides with the predetermined code, it sends a signal for the actuator to open the sash and another signal for closing the sash after a predetermined time period.

Furthermore, the window for receiving and delivering orders according to the present invention also comprises an extensible platform established in the upper part of the sash and enlarging the surface of the sash and allowing the surface thereof to be used for receiving and delivering objects through aerial means, for example. This extensible platform allows placing any object thereon, both for receiving the order and for delivering the order to an authorized delivery person who will open the sash with the predetermined code to access the object.

The window for receiving and delivering orders according to the present invention may also comprise a volumetric sensor placed in the inner part of the extensible platform for detecting the presence of an object in said extensible platform. In accordance with the invention, as defined by claim 1, the volumetric sensor is comprised by the window in the extensible platform which allow detecting the presence of an object placed on said extensible platform.

To increase safety, the window may comprise a lock connected to said processor, such that when the processor determines that the code which has been entered coincides with the predetermined code, it sends a signal for unlocking the lock to allow opening the sash.

Furthermore, the window for receiving and delivering orders may also comprise an indicator, indicating the position where the sash is placed.

To prevent the window according to the present invention from becoming unavailable for use in the event of a power outage, said processor can be powered by means of a battery, which allows the opening and closing of the sash in any case.

If desired, the window for receiving and delivering orders according to the present invention may also comprise an alarm which is activated in the case of an emergency.

According to a preferred embodiment, said sash is articulated in the upper part thereof by means of hinges, although it may be opened and closed in any suitable manner to the right or left, according to user's needs.

For example, said actuator for opening and closing the sash, as well as extending the platform, is a pneumatic or hydraulic piston, although it may be any suitable actuator.

To facilitate installation, said processor is housed in a box which is connected to the actuator and to the code entering means by means of a connection plug.

### Brief Description of the Drawings

To better understand what has been set forth, several drawings in which a practical embodiment is schematically depicted only by way of non-limiting example are attached.
Figure 1 is a front elevational view of a preferred embodiment of the window for receiving and delivering orders according to the present invention in its closed or standby position;
Figure 2 is a plan view of the window for receiving and delivering objects according to the present invention in its open position.
Figure 3 is a left profile view of the window for receiving and delivering orders according to the present invention in its open position.
Figure 4 is a right profile view of the window for receiving and delivering orders according to the present invention in its open position.

### Description of Preferred Embodiments

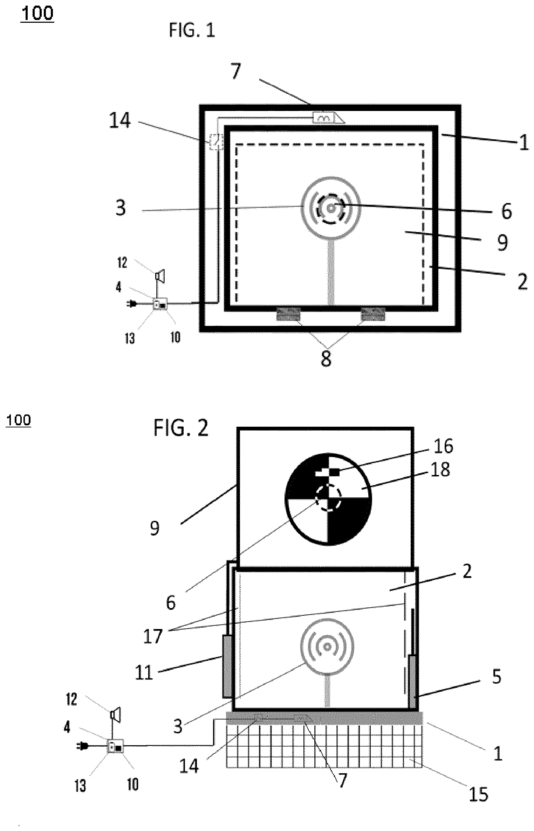

Figure 1 shows the front part or elevational view of a preferred embodiment of the window for receiving and delivering orders according to the present invention, generally identified by means of reference number 100, and comprising a frame 1, a sash 2 which is attached to said frame 1 and can be placed in a closed or standby position (shown in Figure 1) or in an open position (shown in Figures 2, 3, and 4).

The sash 2 has been attached to the frame 1 by mechanical means which, in Figure 1, comprise hinges 8. The hinges 8 allow the articulation of the sash 2 with respect to the frame 1 of the window 100. Furthermore, the window 100 also comprises code entering means 3, for example, a QR code reader, RFID code reader, barcode reader, etc. or a keypad, for example, a virtual keypad on a touch screen, for manually entering a code.

Figure 2 shows a plan view of the upper part of the window 100 for receiving and delivering orders according to the present invention, in which the protective net or barrier 15 attached to the frame 1 and in which parcels are stored can be seen, and the sash 2 in its open position the movement of which is driven by means of an actuator 5, for example, a piston. Furthermore, an extensible platform 9 in its deployed position the movement of which is driven by means of a second actuator 11, for example, a piston, can be seen. Furthermore, the landing sensor 6 and the wind-resistant electromagnet 16 can be seen in the center of the extensible platform 9.

According to the depicted embodiment, a lock 7, which can be locked to prevent the opening of the sash 2 and unlocked to allow the opening of the sash 2, has been arranged in the frame 1 of the window 100.

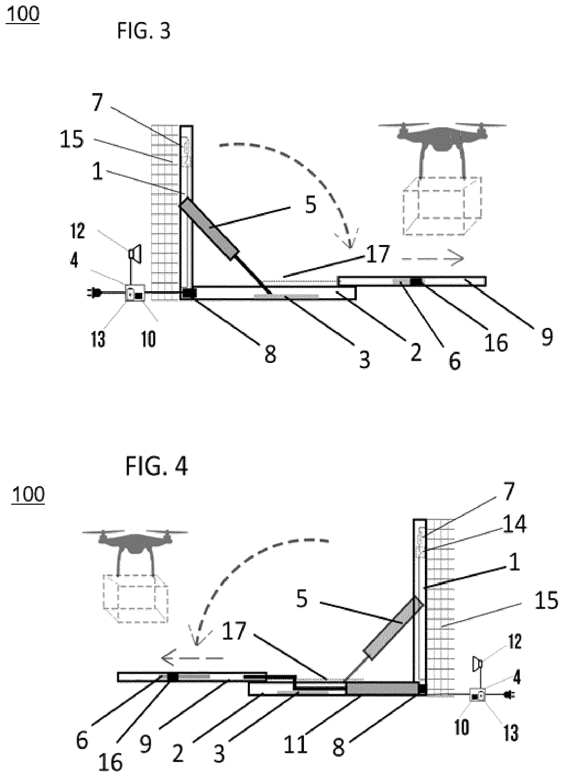

Figure 3 shows a left profile view of the window 100 according to the present invention also comprising a processor 10 which is connected to the actuator 5 and to the code entering means 3, and also to the lock 7, if it is present, such that when one brings a delivery code close the means 3 or enters it manually, the processor 10 verifies that it is correct and proceeds with the opening of the sash 2.

Said processor 10 is powered by a battery 13 such that orders can be received and delivered even when there is no power supply, and it is housed in a box 4 which is connected to the actuator 5, to the means 3, and to the lock 7 by means of a plug which allows readily connecting and disconnecting the electronic parts of the mechanical part of the window 100 according to the present invention, for easy installation or replacement.

The processor 10 is also connected to an alarm 12 which sends a warning if necessary, as will be described below.

Figure 4 shows a right profile view of the window 100 according to the present invention, in which the extensible platform 9 located in its inner part is also shown, which platform allows the placement of an object by the delivery person or drone delivering the object, or by the user leaving an object on the platform 9 for pick-up by the delivery person.

The window 100 also comprises a volumetric sensor 6 in the extensible platform 9 which allows detecting the presence of an object placed on said extensible platform 9, and an indicator 14 established in the frame 1, indicating the state of the sash 2 (open or closed).

The operation of the window 100 according to the present invention is as follows. To receive an object or order delivered by a delivery person or drone, the delivery person or drone must enter a code through the means 3 located in the outer part of the window 100. The code can be entered manually or scanned from a distance by means of the reader of said means 3.

The code which has been entered is sent to the processor 10 which compares said code with a predetermined code or several predetermined codes, and if they coincide, the processor 10 sends a signal to the actuator 5 and to the lock 7 for opening the sash 2. Once the sash 2 is open, the delivery person or drone can leave the parcel on the extensible platform and the sash 2 will then close and the parcel will be left inside the dwelling.

The actuator 5 will not receive the closing order if light is detected in the landing sensor 6, and the alarm 12 will go off if the time exceeds that programmed by the user.

Furthermore, the user will preferably be informed of every opening and closing of the sash 2, as well as the reading and alarm codes, on his or her mobile telephone as a result of a permanent Internet connection.

Furthermore, if braking of the sash 2 is caused on purpose, it will be stopped, and the alarm 12 will be triggered, and a message will be sent to the user's mobile. When the locking is released, the sole purpose of the sash 2 is to close, and it will attempt to do so repeatedly until it closes up.

In the event that the user wants to return an order to the delivery person or drone, the user will simply have to place the order on the extensible platform 9 located inside the window 1, in the area with the wind-resistant electromagnet 16.

For the delivery person or drone to collect the order, they must enter a predetermined code as described above, allowing the opening of the sash 2 and accessing the order placed on the extensible platform 9.

The closing of the sash 2 will be carried out in the same manner described above, also informing the user of same and activating the alarm 12, if necessary.

Although reference has been made to a specific embodiment of the invention, it is obvious for one skilled in the art that the window for receiving and delivering orders described is susceptible to a number of variations and modifications. The scope of protection of the invention is defined by the appended claims.

## Claims

1. Window (100) for receiving and delivering objects, comprising:
a frame (1);
a sash (2) attached by mechanical means to the frame (1), wherein the sash (2) is closed in the standby position thereof;
and code entering means (3) which allow opening the sash (2) upon entering a predetermined code,
wherein, in the open position, the sash (2) allows the surface thereof to be used for receiving and delivering objects,
**characterized in that**
the sash (2) comprises an extensible platform (9) established in the upper part of the sash (2) and enlarging the surface of the sash (2), and
a second actuator (11) for extending or retracting the platform (9) by means of guide rails (17) located in the lower part of the platform (9) and in the upper part of the sash (2), and
a volumetric sensor (6) in the extensible platform (9) which allows detecting the presence of an object placed on said extensible platform (9).

2. Window (100) for receiving and delivering objects according to claim 1, wherein said code entering means (3) comprise a receiving antenna with a code reader or a keypad for entering codes.

3. Window (100) for receiving and delivering objects according to claim 2, also comprising an actuator (5) for moving the sash (2) from the standby position to the open position, and vice versa.

4. Window (100) for receiving and delivering objects according to claim 3, wherein the actuator (5) and the code entering means (3) are connected to a processor (10), such that when the processor (10) determines that the code which has been entered coincides with the predetermined code, it sends a signal for opening the sash (2) to the actuator (5) and after a predetermined time interval, a signal for closing the sash (2).

5. Window (100) for receiving and delivering objects according to claim 1, wherein the extensible platform (9) comprises:
a landing area (18) with a landing sensor (6) for detecting the presence of an object;
and an electromagnet (16) for holding said object and preventing atmospheric phenomena from causing the object to fall off the extensible platform (9).

6. Window (100) for receiving and delivering objects according to any of claims 4 to 5, wherein the frame (1) comprises a lock (7) connected to said processor (10),
wherein the processor (10) is configured for determining that the code which has been entered coincides with the predetermined code, it sends a signal for unlocking the lock (7), causing the opening of the sash (2).

7. Window (100) for receiving and delivering objects according to claim 1, wherein the frame (1) comprises an indicator (14) indicating the position of the sash (2).

8. Window (100) for receiving and delivering objects according to claim 1, wherein there is included in the rear part thereof a barrier which is in the form of a protective net and furthermore serves as a parcel deposition element (15).

9. Window (100) for receiving and delivering objects according to claim 4, wherein said processor (10) is powered by means of a battery (13).

10. Window (100) for receiving and delivering objects according to claim 1, comprising an alarm (12) which is activated in the case of an emergency.

11. Window (100) for receiving and delivering objects according to claim 1, wherein the mechanical means comprise hinges (8) which allow the articulation of the sash (2) in the lower part thereof.

12. Window (100) for receiving and delivering objects according to claim 3, wherein said actuator (5) is a pneumatic or hydraulic piston.

13. Window (100) for receiving and delivering objects according to claim 4, wherein said processor (10) is housed in a box (4) which is connected to the actuator (5) and to the second actuator (11).

## Patentansprüche

1. Fenster (100) zum Erhalten und Ausgeben von Objekten mit:
einem Rahmen (1);
einem verschiebbaren Fenster (2), das mit einem mechanischen Mittel an dem Rahmen (1) befestigt ist, wobei das verschiebbare Fenster (2) in seiner Standby-Position geschlossen ist;
und Code-Eingabemittel (3), die es erlauben, das verschiebbare Fenster (2) nach der Eingabe eines vorbestimmten Codes zu öffnen,
wobei es das verschiebbare Fenster (2) in der offenen Position erlaubt, dass dessen Oberfläche zum Erhalten und Ausgeben von Objekten verwendet werden kann,
**dadurch gekennzeichnet, dass**
das verschiebbare Fenster (2) eine ausziehbare Plattform (9) aufweist, die in dem oberen Teil des verschiebbaren Fensters (2) vorgesehen ist und die Oberfläche des verschiebbaren Fensters (2) vergrößert, und mit einem zweiten Aktuator (11) zum Ausziehen und Einziehen der Plattform (9) mit Hilfe von Führungsschienen (17), die in dem unteren Teil der Plattform (9) und dem oberen Teil des verschiebbaren Fensters (2) vorgesehen sind, und
dass ein volumetrischer Sensor (6) in der ausziehbaren Plattform (9) vorgesehen ist, der es erlaubt, die Gegenwart eines Objektes zu detektieren, das auf der ausziehbaren Plattform (9) platziert ist.

2. Fenster (100) zum Erhalten und Ausgeben von Objekten nach Anspruch 1, bei dem das Code-Eingabemittel (3) eine Empfangsantenne mit einem Code-Reader und einem Keypad zum Eingeben von Codes aufweist.

3. Fenster (100) zum Erhalten und Ausgeben von Objekten nach Anspruch 2, das ferner einen Aktuator (5) zum Bewegen des verschiebbaren Fensters (2) aus der Standby-Position in die offene Position und umgekehrt, aufweist.

4. Fenster (100) zum Erhalten und Ausgeben von Objekten nach Anspruch 3, bei dem der Aktuator (5) und das Code-Eingabemittel (3) mit einem Prozessor (10) verbunden sind, derart, dass dann, der Prozessor (10), wenn er feststellt, dass der Code, der eingegeben wurde, mit dem vorbestimmten Code übereinstimmt, ein Signal zum Öffnen des verschiebbaren Fensters (2) an den Aktuator (5) sendet und nach einem vorbestimmten Zeitintervall, ein Signal zum Schließen des verschiebbaren Fensters (2) sendet.

5. Fenster (100) zum Erhalten und Ausgeben von Objekten nach Anspruch 1, bei dem die ausziehbare Plattform (9) Folgendes aufweist:
einen Landebereich (18) mit einem Landesensor (6) zum Detektieren der Gegenwart eines Objektes;
und einen Elektromagneten (16) zum Halten des Objektes und zum Verhindern von atmosphärischen Phänomenen, die verursachen, dass das Objekt von der ausziehbaren Plattform (9) fällt.

6. Fenster (100) zum Erhalten und Ausgeben von Objekten nach irgendeinem der Ansprüche 4 bis 5, bei dem der Rahmen (1) ein Schloss (7) aufweist, das mit dem Prozessor (10) verbunden ist, wobei der Prozessor (10) dazu ausgebildet ist, festzustellen, ob der Code, der eingegeben wurde, mit dem vorbestimmten Code übereinstimmt, dann ein Signal zum Öffnen des Schlosses (7) zu senden, was das Öffnen des verschiebbaren Fensters (2) verursacht.

7. Fenster (100) zum Erhalten und Ausgeben von Objekten nach Anspruch 1, bei dem der Rahmen (1) einen Indikator (14) aufweist, der die Position des verschiebbaren Fensters (2) anzeigt.

8. Fenster (100) zum Erhalten und Ausgeben von Objekten nach Anspruch 1, bei dem in dem hinteren Teil davon eine Barriere eingeschlossen ist, die in der Form eines Schutznetzes ausgebildet ist und die ferner als ein Paketaufnahmeelement (15) dient.

9. Fenster (100) zum Erhalten und Ausgeben von Objekten nach Anspruch 4, bei dem der Prozessor (10) mit Hilfe einer Batterie (13) betrieben ist.

10. Fenster (100) zum Erhalten und Ausgeben von Objekten nach Anspruch 1, das einen Alarm (12) aufweist, der in einem Notfall aktiviert wird.

11. Fenster (100) zum Erhalten und Ausgeben von Objekten nach Anspruch 1, bei dem das mechanische Mittel Scharniere (8) aufweist, die eine Verschwenkung des verschiebbaren Fensters (2) in den unteren Teil davon erlauben.

12. Fenster (100) zum Erhalten und Ausgeben von Objekten nach Anspruch 3, bei dem der Aktuator (5) ein pneumatischer oder hydraulischer Kolben ist.

13. Fenster (100) zum Erhalten und Ausgeben von Objekten nach Anspruch 4, bei dem der Prozessor (10) in einer Box (4) aufgenommen ist, die mit dem Aktuator (5) und dem zweiten Aktuator (11) verbunden ist.

## Revendications

1. Fenêtre (100) destinée à la réception et à la distribution d'objets, comprenant :
un cadre (1) ;
un châssis (2) fixé par des moyens mécaniques au cadre (1), dans laquelle le châssis (2) est fermé dans sa position de repos ;
et des moyens d'entrée de code (3) qui permettent l'ouverture du châssis (2) lors de l'entrée d'un code prédéterminé,
dans laquelle, dans la position ouverte, le châssis (2) permet à sa surface d'être utilisée pour recevoir et distribuer des objets,
**caractérisée en ce que** le châssis (2) comprend une plateforme extensible (9) établie dans la partie supérieure du châssis (2) et agrandissant la surface du châssis (2), et un second actionneur (11) destiné à étendre ou rétracter la plateforme (9) à l'aide de rails de guidage (17) situés dans la partie inférieure de la plateforme (9) et dans la partie supérieure du châssis (2), et
un capteur volumétrique (6) dans la plateforme extensible (9) qui permet de détecter la présence d'un objet placé sur ladite plateforme extensible (9).

2. Fenêtre (100) destinée à la réception et à la distribution d'objets selon la revendication 1, dans laquelle lesdits moyens d'entrée de code (3) comprennent une antenne de réception avec un lecteur de code ou un clavier destiné à entrer des codes.

3. Fenêtre (100) destinée à la réception et à la distribution d'objets selon la revendication 2, comprenant également un actionneur (5) destiné à déplacer le châssis (2) de la position de repos à la position ouverte, et vice versa.

4. Fenêtre (100) destinée à la réception et à la distribution d'objets selon la revendication 3, dans laquelle l'actionneur (5) et les moyens d'entrée de code (3) sont reliés à un processeur (10), de telle sorte que lorsque le processeur (10) détermine que le code qui a été entré coïncide avec le code prédéterminé, il envoie à l'actionneur (5) un signal pour ouvrir le châssis (2) et après un intervalle de temps prédéterminé, un signal pour fermer le châssis (2).

5. Fenêtre (100) destinée à la réception et à la distribution d'objets selon la revendication 1, dans laquelle la plateforme extensible (9) comprend :
une zone de pose (18) pourvue d'un capteur de pose (6) destiné à détecter la présence d'un objet ;
et un électroaimant (16) destiné à maintenir ledit objet et à empêcher un phénomène atmosphérique de faire tomber l'objet de la plateforme extensible (9).

6. Fenêtre (100) destinée à la réception et à la distribution d'objets selon l'une quelconque des revendications 4 à 5, dans laquelle le cadre (1) comprend un verrou (7) relié audit processeur (10),
dans laquelle le processeur (10) est configuré pour déterminer que le code qui a été entré coïncide avec le code prédéterminé, il envoie un signal pour déverrouiller le verrou (7), entraînant l'ouverture du châssis (2).

7. Fenêtre (100) destinée à la réception et à la distribution d'objets selon la revendication 1, dans laquelle le cadre (1) comprend un indicateur (14) indiquant la position du châssis (2).

8. Fenêtre (100) destinée à la réception et à la distribution d'objets selon la revendication 1, dans laquelle est comprise, dans la partie arrière de celle-ci, une barrière qui se présente sous la forme d'un filet de protection et sert en outre d'élément de dépôt de colis (15).

9. Fenêtre (100) destinée à la réception et à la distribution d'objets selon la revendication 4, dans laquelle ledit processeur (10) est alimenté à l'aide d'une batterie (13).

10. Fenêtre (100) destinée à la réception et à la distribution d'objets selon la revendication 1, comprenant une alarme (12) qui est activée en cas d'urgence.

11. Fenêtre (100) destinée à la réception et à la distribution d'objets selon la revendication 1, dans laquelle lesdits moyens mécaniques comprennent des charnières (8) qui permettent l'articulation du châssis (2) dans la partie inférieure de celui-ci.

12. Fenêtre (100) destinée à la réception et à la distribution d'objets selon la revendication 3, dans laquelle ledit actionneur (5) est un piston pneumatique ou hydraulique.

13. Fenêtre (100) destinée à la réception et à la distribution d'objets selon la revendication 4, dans laquelle ledit processeur (10) est logé dans une boîte (4) qui est reliée à l'actionneur (5) et au second actionneur (11).
